# EUROPÄISCHE PATENTANMELDUNG

(11) **EP 4 700 000 A1**
(43) Veröffentlichungstag der Anmeldung: **25.02.2026**
(21) Anmeldenummer: 25178673.7
(22) Anmeldetag: 24.05.2025
(51) Int. Cl.: C04B 30/02, E04C 2/16, E04B 2/04, E04B 1/74

(54) **SCHALLABSORBIERENDE ELEMENTE AUS REET-WELLERLEHM**

(30) Priorität: 23.08.2024 EP 24196267
(71) Anmelder: Reeh, Ute, 40225 Düsseldorf (DE)
(72) Erfinder: Reeh, Ute, 40225 Düsseldorf (DE)
(74) Vertreter: Bogensberger, Burkhard

(57) **Zusammenfassung**

Die Erfindung bezieht sich auf Lehmelemente auf Basis einer verdichteten Reetwellerlehmmasse mit darin ungerichtet angeordneten Schilfrohrhalmen unterschiedlicher Länge als akustisch wirksamem, eingearbeitetem Fasermaterial, wobei durch einen formgebenden Schneide-, Säge- oder Fräsvorgang der verdichteten Lehmmasse eine Vielzahl an Schilfrohrhalmen an- oder durchgeschnitten wird und dadurch nach aussen hin offene Hohlräume und Kanäle unterschiedlicher Formen, Grössen, Längen und Ausrichtung in den Schnittflächen der Lehmelemente entstehen, die den Lehmelementen eine schallabsorbierende Funktionalität verleihen. Die Erfindung bezieht sich weiters auf die Herstellung und die Verwendung der Lehmelemente im Hoch-, Infrastruktur- und Landschaftsbau.

## Beschreibung

### TECHNISCHES GEBIET

Die vorliegende Erfindung liegt im Bereich des Bauwesens und bezieht sich auf die Herstellung von faserarmierten Lehmelementen mit schallabsorbierenden Oberflächen, vornehmlich zur Verwendung im ökologisch nachhaltigen Infrastruktur- und Landschaftsbau sowie im Hochbau.

### STAND DER TECHNIK

"Wellerlehm" bezeichnet in Deutschland üblicherweise ein historisches Baumaterial aus einer Masse aus Lehm, typischerweise Bodenaushub, vermischt mit Stroh als Armierung. Wellerlehm wurde zur Errichtung von Häusern und Scheunen seit Jahrhunderten traditionell von Hand ohne Schalung in Schichten aufgesetzt und in halb getrocknetem Zustand mit scharfem Spaten zur Begradigung der Oberfläche "abgestochen", wodurch im Regelfall massive tragende Lehmwände aus einem einzigen Stück gebildet wurden.

Die Produktion von Wellerlehm für heutige Anwendungen muss hingegen mechanisiert erfolgen, um konkurrenzfähig zu sein. So wird etwa in EP 3929169A1 ein Verfahren offenbart, bei dem durch eine hydraulische Presse, pneumatische Presse, Rüttelpresse oder durch Vibration eine fertig gemischte Wellerlehmmasse bis zu einer gewünschten Festigkeit verdichtet wird und daraus verbaubare, tragfähige Elemente aus Wellerlehm vorgefertigt werden.

Für Schallschutzwände - eine der angestrebten Anwendungen modernisierten Wellerlehms - ist jedoch eine schallabsorbierende Oberfläche erforderlich. Traditionelle und in Schalung oder in einer Presse gefertigte Wellerlehmelemente haben eine weitgehend schallharte Oberfläche, die Schall reflektiert. Derartige Wellerlehmelemente sind zwar dank ihrer Masse und Dichte schall*dämmend,* qualifizieren sich jedoch nicht als Schallschutzwände mit relevanter akustischer Wirkung. Bauelemente mit ausgelobter Schallschutzwirkung müssen zusätzlich schall*absorbierend* sein, d.h. den Schall möglichst wenig reflektieren.

Schallabsorption, d.h. eine Verminderung der Schallenergie, erreicht man u.a. durch Poren und nach außen hin offene Hohlräume in der Oberfläche eines Bauelements, z.B. einer Wand, in denen die Schallwellen gewissermaßen "gefangen" und mehrfach hin und her reflektiert werden, gegebenenfalls Wirbel bilden und dabei einerseits durch die bewirkte Schallwegverlängerung und andererseits durch Dissipation, also Energieabgabe in Form von Reibungswärme an das umliegende Material, einen wesentlichen Teil ihrer ursprünglichen Schallenergie verlieren. Derartige Hohlräume und Poren können beispielsweise durch in Beton- oder Lehmwände eingearbeitete Pflanzenstängel, die innen hohl sind und eine gewisse mechanische Druck- und Zugfestigkeit aufweisen, wie z.B. Schilfrohrhalme oder Bambusstängel, bereitgestellt werden.

US 5,322,738 offenbart Lehmziegel, die Schilfrohrhalme enthalten können, welche in einer oder mehreren Schichten übereinander angeordnet und parallel zueinander ausgerichtet sind und sich über die gesamte Länge oder Breite des Lehmziegels erstrecken.

DE 19825440 A1 offenbart einen Leichtlehmziegel, bei dem die Lehmmasse durch gehäckseltes Schilfrohr faserarmiert wird.

DE 102018116426 A offenbart ein Bauelement aus Lehm und Strohhalmen oder Schilfrohrhalmen, insbesondere einen Lehmziegel, in welchem die Stroh- oder Schilfrohrhalme, ähnlich wie in US 5,322,738, parallel zueinander ausgerichtet sind und sich über die gesamte Breite des Lehmziegels erstrecken.

Wellerlehm ist ein Kompositmaterial aus Lehm, typischerweise Bodenaushub unterhalb der Humusschicht, und langfaserigen Pflanzenbestandteilen, in Deutschland üblicherweise Stroh aus Getreideanbau. Da Stroh von Landwirten nach der Getreideernte heute zumeist umgepflügt und wieder in den Boden eingearbeitet wird, sind alternative langfaserige Pflanzenbestandteile als mögliche Armierung für Lehmmassen gefragt, und zwar vorzugsweise solche, die bislang nicht oder wenig genutzt werden.

Für die kommerzielle, insbesondere industrielle, großtechnische Anwendung von modifiziertem Wellerlehm, d.h. Lehm mit Strohersatzmaterial, ist eine über Jahre gleichbleibende Qualität und zuverlässige Liefermöglichkeit in großen Mengen von entscheidender Bedeutung. Die Bereitstellung einer definierten Qualität ist für die Rezeptur von faserarmiertem Lehmmaterial vor allem dann wichtig, wenn bestimmte Anforderungen und Mindestkennwerte einschlägiger Normen und Bauvorschriften im Hoch- und Infrastrukturbau einzuhalten sind. Aus ökologischer wie ökonomischer Sicht ist außerdem die möglichst regionale Verfügbarkeit der Rohmaterialien von besonderer Bedeutung.

All diesen Umständen wird mit der vorliegenden Erfindung Rechnung getragen.

### KURZE BESCHREIBUNG DER ERFINDUNG

Schilfrohr, auch als Reet bezeichnet, ist ein in Norddeutschland zur Deckung von Dächern traditionell genutztes Material. Moor- oder Sumpfflächen und Seeufer erzeugen jährlich große Mengen an Schilfrohr, das man abmähen und verwerten und damit zusätzlich den Erhalt bestimmter Landschaften und Ökotope fördern kann.

Im Hinblick auf eine alternative, modernisierte Wellerlehmherstellung ist Schilfrohr als wesentliches pflanzliches Armierungsfasermaterial aufgrund mehrerer Eigenschaften vorteilhaft:
- es hat eine größere Härte und höhere Zugfestigkeit als Stroh;
- weist eine hohe Silkathaltigkeit auf;
- weist ein vergleichsweise stabiles Hohlrohr auf, was für die Schallabsorption eine erforderliche, wesentliche Eigenschaft darstellt;
- es kann in großem Umfang jährlich geerntet werden;
- es weist weitestgehend gleichbleibende strukturelle, chemische und mechanische Materialeigenschaften auf;
- es bindet - wie Stroh oder jedes andere Pflanzenmaterial - als Grundmaterial Kohlenstoff, der in oxidierter Form als Bestandteil des Treibhausgases CO₂ aus der Atmosphäre entnommen wird. Der dadurch erzielte CO₂ - reduzierende Effekt hält für die Lebensdauer des Materials an, im besten Fall also für Hunderte von Jahren.

Ein weiterer Vorteil der Verwendung von Schilfrohr ist, dass im Zuge von Naturschutz- und Klimamaßnahmen renaturierte sowie erhaltene Moor- und Sumpfflächen als Wirtschaftsflächen für Landwirte und als Teil einer Wertschöpfungskette zur Produktion von modifiziertem Wellerlehm Ertrag abwerfen können, während Schilfrohr heute in Deutschland praktisch so gut wie nicht verwertet wird.

### FIGURENBESCHREIBUNG

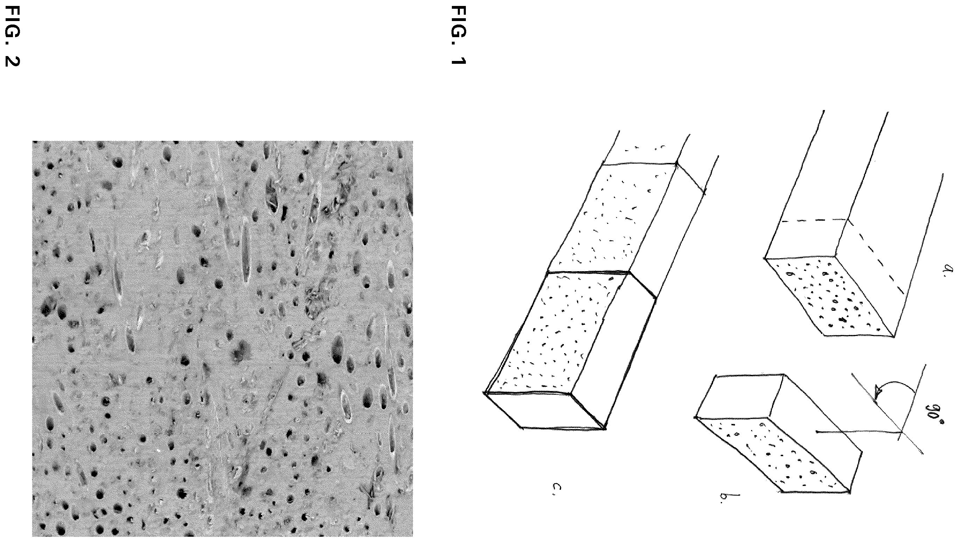

- Fig. 1: zeigt das Herstellungsprinzip einer Ausführungsform der erfindungsgemäßen Lehmelemente mittels einer kontinuierlich arbeitenden Verarbeitungsvorrichtung, z.B. Schalungsraum, Druckkammer oder Presse, mit anschließendem Schneiden oder Sägen quer zur Laufrichtung des dabei entstehenden Endlosstranges (a) aus verdichtetem, mit Schilfrohr und gegebenenfalls zusätzlichem Fasermaterial armiertem Lehm (= Reetwellerlehm) in Einzelelemente (b) gewünschter Dicke/Wandstärke und im wesentlichen rechteckigem Querschnitt. Nachfolgend können die geschnittenen oder gesägten Lehmelemente beispielsweise stirnseitig aneinander gereiht und zu einem grösseren Verbund (c), z.B. einer Schallschutzwand, verbaut werden.
- Fig. 2: zeigt die gesägte Oberfläche eines erfindungsgemäß hergestellten Reetwellerlehm-Probekörpers mit unzähligen offenen Poren, Hohlräumen und Kanälen verschiedener Größe, Form, Länge und Orientierung.

### DETAILLIERTE BESCHREIBUNG DER ERFINDUNG

Die in EP 3929169A1 beschriebene, maschinelle Herstellung von hochverdichtetem Wellerlehm in einer Presse erzeugt eine nahezu perfekt glatte Oberfläche, die schallreflektierend und somit für einen wirksamen Schallschutz nicht geeignet ist. Dieser erhebliche schalltechnische Nachteil konnte erfindungsgemäss durch die folgenden Massnahmen erfolgreich überwunden werden, nämlich:
a) durch die Verwendung von Schilfrohr als Haupt-Armierungsmaterial für die Lehmmasse:
   Messungen an erfindungsgemäß hergestellten Versuchskörpern mittels Impedanzrohr haben ergeben, dass offene Schilfrohrenden, optisch erkennbar als Poren, Löcher oder Kanäle in der Oberfläche des erfindungsgemäßen Lehmelements, die Schallabsorptionsfähigkeit der Lehmoberfläche deutlich erhöhen. Weiterhin konnte in diesen Tests nachgewiesen werden, dass die Länge der Halme aufgrund von Resonanzeffekten Einfluss auf die absorbierbaren Schallfrequenzen hat. In hoher Dichte und mit unterschiedlich langen Halmen chaotisch bestückter Lehm mit einer solcherart konfigurierten Oberfläche genügt den normativen bautechnischen Anforderungen für Schallschutzwände.
   Die angeschnittene Halme der in Fig.1 dargestellten Lehmquader (b, c) sind dabei nicht nur akustisch hochwirksam sondern erfüllen obendrein die wichtige Funktion von Erosionsbremsen, zur Verhinderung frühzeitiger Abwitterung der Oberflächen der Lehmelemente bei deren Einsatz im Außenbereich, beispielsweise als Lärmschutzelement, insbesondere in Form von Lärmschutzwänden entlang viel befahrener Verkehrswege, als schallabsorbierende Aussenwand oder Fassade von Gebäuden, als Sichtschutz, Kunstobjekt, oder Teil von Landschaftsgestaltungsprojekten mit lärmmindernder Wirkung. Bei solchen Anwendungen im Außenbereich ergibt sich darüber hinaus ein erfreulicher Nebeneffekt dadurch, dass die offenen Schilfrohrenden an der Oberfläche des Materials Hohlräume bilden, die von verschiedenen Insekten, z.B. Solitärbienenarten, gerne als Brutraum genutzt werden, wodurch diese Lehmelemente auch einen Beitrag zur Biodiversität leisten. Die im Inneren des Materials eingeschlossenen Hohlräume wirken sich außerdem positiv auf die wärmedämmenden Eigenschaften der erfindungsgemässen, Schilfrohr-armierten Lehmelemente, im Nachfolgenden als Reetwellerlehm-Elemente bezeichnet, aus.
b) durch eine ungerichtete, quasi "chaotische", zufällige Anordnung der Schilfrohrhalme:
   Die höchste Stabilität, Ökonomie in der Herstellung und das breiteste Spektrum der absorbierten Schallfrequenzen wird durch eine chaotische, ungerichtete, rein zufällige Anordnung sowie durch unterschiedliche Längen der eingesetzten Schilfrohrhalme erreicht. Bevorzugte Längen der Schilfrohrhalme liegen in einem Bereich von ca. 1 cm bis ca. 50 cm, insbesondere von ca 3 bis ca. 25 cm; eine weitgehend parallele Anordnung von Schilfrohrhalmen zahlreicher unterschiedlicher Längen würde zwar, insbesondere im Verbund mit ergänzendem, chaotisch verteiltem Fasermaterial ohne eigenen akustischen Beitrag, ebenfalls gewisse schallabsorbierende Effekte erzeugen, eine derartige Ausführungsform von Reetwellerlehm-Elementen ist aber aufgrund des erhöhten Arbeitsaufwandes und der vergleichsweise geringeren Stabilität und Festigkeit der resultierenden Lehmelemente nicht bevorzugt; und
c) durch das Abtrennen von Reetwellerlehm-Elementen in Quaderform von gewünschter Länge und/oder Dicke aus einem vorgeformten Strang aus verdichtetem Reetwellerlehm und/oder durch das Behandeln mindestens einer Oberfläche eines Reetwellerlehm-Elements beliebiger Länge durch einen Schneide-, Säge- oder Fräsvorgang, zur Erzeugung von Schnittflächen mit offenporiger, schallabsorbierender Oberflächenstruktur.

Der Begriff "Schnittflächen" soll in diesem Zusammenhang der Einfachheit halber nicht nur solche Oberflächen umfassen, die durch einen Schneidevorgang erzeugt werden, sondern auch jene, die durch Sägen oder Fräsen erzeugt werden.

Die hierin verwendeten Begriffe "Reet", "Schilf" und "Schilfrohr" sind als Synonyme zu verstehen und beziehen sich auf eine Mehrzahl an Schilfrohrhalmen, die üblicherweise einen oberen, schlankeren Teil und einen unteren, dickeren und stärker verholzten Teil aufweisen. Die für die vorliegende Erfindung geeigneten Schilfrohrhalme weisen im Inneren einen Hohlraum auf, dessen Durchmesser sich typischerweise von der Halmspitze zur Halmbasis hin vergrößert. Wesentlich für die vorliegende Erfindung ist weiters, dass die Schilfrohrhalme, beispielsweise in Bündeln, auf die gewünschten Längen von ca. 1 - 50 cm, insbesondere 3 - 25 cm, gesägt oder zugeschnitten werden, sodass die einzelnen Halmstücke im wesentlichen intakt bleiben und die Form beidseitig offener Röhrchen unterschiedlicher Länge aufweisen.

Gehäckseltes Schilfmaterial ist für den Einsatz als schallabsorbierendes und erosionsbremsendes Grundelement im Rahmen und für die Zwecke der vorliegenden Erfindung nicht geeignet, da es nicht die erforderlichen Hohlräume und die im Wesentlichen intakten Röhrchenstrukturen aufweist, die für die Ausbildung der erfindungswesentlichen offenporigen Oberflächenstruktur notwendig sind. Als ergänzendes Fasermaterial zur Erhöhung der mechanischen Festigkeit der erfindungsgemässen Reetwellerlehm-Elemente wäre es jedoch einsetzbar.

Für die Herstellung von erfindungsgemäßen Reetwellerlehm-Elementen im industriellen Maßstab ist eine kontinuierliche Verfahrensvariante bevorzugt. So kann beispielsweise in einer als Endlospresse konzipierten Verarbeitungsvorrichtung ein Endlosstrang aus erfindungsgemäßem Reetwellerlehm in einem Schalungskanal bereitgestellt, verdichtet und mittels einer Fördereinrichtung aus dem Schalungskanal hinaus zu einer Schneide- oder Sägevorrichtung gefördert werden, wo der verdichtete Endlosstrang quer zu seiner Lauf- bzw. Förderrichtung in einzelne Elemente, typischerweise in Blöcke in Quaderform mit rechteckigem oder quadratischem Querschnitt und beliebiger Dicke geschnitten oder gesägt werden kann (Fig.1). Die Dicke wird dabei durch die Positionierung der Säge oder Schneidevorrichtung bestimmt und entspricht im wesentlichen der gewünschten Wandstärke des erzeugten Lehmelements. Die dabei entstandenen quaderförmigen Blöcke werden vertikal oder horizontal derart verbaut, dass die geschnittenen oder gesägten Flächen die dem Schall zugewandten Wandflächen bilden. Eine Prinzipskizze dieses Vorgangs ist in Fig. 1 dargestellt.

Die Herstellung solcher Bauelemente aus Reetwellerlehm ist prinzipiell auch vor Ort, durch traditionelles, händisches Aufschichten oder in einer Schalung, gegebenenfalls einer mobilen Schalung oder Gleitschalung, mittels pneumatischer Verdichtung und/oder Rüttelverdichtung möglich. Auch in diesem Fall erfolgt ein nachfolgendes Sägen, Schneiden oder Fräsen des unter Umständen viele Meter langen, vorgeformten Stranges aus verdichtetem Reetwellerlehm quer zur Schalungsrichtung bzw. zur Längsrichtung des entstandenen, länglichen Stranges.

Je nach Dimensionierung der Schalung oder des händischen Aufschichtens in Breite und Höhe ist auch ein Absägen oder Abfräsen in Schalungsrichtung, d.h. in Längsrichtung des entstandenen Stranges, möglich oder notwendig.

Gemäss einer Ausführungsform des Herstellungsverfahrens werden die Schalungstafeln mit grossem horizontalem Abstand parallel zueinander platziert, beispielsweise mit einem Abstand von 2 bis 5 m, bei einer Höhe der Schalungstafeln von beispielsweise 1 bis 3m, mit Reetwellerlehm befüllt und der Reetwellerlehm mechanisch verdichtet. In diesem Fall werden nach dem Entfernen der Schalung - in Analogie zu Fig. 1- durch das Absägen von Teilstücken quer zur Längsrichtung des dabei entstehenden, verdichteten Reetwellerlehm-Stranges, grosse LehmQuader, z.B. Wandelemente, hergestellt. Dabei entspricht deren vorgewählte und durch den Sägevorgang erzeugte Dicke der gewünschten Wandstärke bzw. Dicke des jeweiligen Lehm-Quaders bzw. Lehm-Wandelements. Die hierbei durch das Sägen erzeugten Oberflächen weisen bereits die erfindungsgemässe, schallabsorbierende Offenporigkeit auf und müssen keinem weiteren Säge- oder Fräsvorgang unterzogen werden.

Alternativ kann der Reetwellerlehm - gemäss einer anderen Ausführungsform des erfindungsgemässen Verfahrens - in derartige, auf einer vorzugsweise ebenen Bodenplatte angebrachte, Schalungen in geringeren Schichtdicken von z.B. 10 - 50 cm eingebracht und verdichtet werden. Ein solcherart hergestellter, beliebig langer Strang in Form einer quasi liegenden Lehmwand aus verdichtetem Reetwellerlehm, muss jedoch vor oder nach dem Entschalen um 90 Grad in eine Hochkant-Position gedreht bzw. aufgerichtet werden, bevor er dem erfindungsgemässen Säge- oder Fräsvorgang unterzogen wird, der in diesem Fall nicht quer sondern parallel zu den grossflächigen Aussenseiten der aufgerichteten Lehmwand oder Lehmwandelemente, d.h. typischerweise in Längsrichtung der Lehmwand, durchgeführt wird. Die Höhe der in die "liegende" Schalung eingebrachten und verdichteten Schicht aus Reetwellerlehm bestimmt die maximale Dicke bzw. Wandstärke des resultierenden Reetwellerlehm-Elements vor dessen OberflächenBehandlung durch Sägen oder Fräsen.

Anstelle einer "liegenden" Schalung kann die Schalung natürlich auch hochkant positioniert werden, wie das z.B. bei Mauerschalungen im Hochbau üblich ist, sodass sich ein nachträgliches Drehen bzw. Aufrichten des dabei entstehenden Stranges aus verdichtetem Reetwellerlehm erübrigt. Bei Einsatz von mobilen Schalungen oder Gleitschalungen ermöglicht diese Ausführungsvariante im Prinzip die Herstellung von endlosen Lehmwänden aus Reetwellerlehm, die je nach vorgesehenem Verwendungszweck nachfolgend quer zu ihrer Längsrichtung in Teilstücke gewünschter Länge abgeschnitten respektive gesägt werden können. Zwecks Erzielung der erfindungsgemässen, schallabsorbierenden Offenporigkeit der - bei bestimmungsgemässer Verwendung frei stehenden - Seitenflächen, werden solcherart hergestellte Rettwellerlehm-Elemente ebenfalls parallel zu ihrer Längsrichtung, zumindest auf einer der beiden Aussenseiten, oberflächlich durch einen Schneide-, Säge- oder Fräsvorgang bearbeitet, um die vorgesehene Offenporigkeit zu erreichen.

Da in den beiden letztgenannten Fällen der im Schalungsverfahren hergestellten Lehmwandelemente aus Reetwellerlehm die Dicke bzw. Wandstärke nicht durch einen Sägevorgang sondern durch den gewählten horizontalen Abstand der Schalungstafeln bei hochkant ausgerichteter Schalung oder durch die Füllhöhe der Lehmschicht bei "liegender" Schalung bestimmt wird, bedarf es einer schichtabtragenden Oberflächenbehandlung, um die vorgesehene Offenporigkeit zu erzeugen. Denn durch das Abtrennen bzw. Absägen von Wandelementen aus dem de facto Endlosstrang quer zur Längsrichtung des Stranges werden in diesen beiden Fällen lediglich die Stirnseiten der Wandelemente erzeugt bzw. freigelegt. Wobei diese Stirnseiten im Zuge des bestimmungsgemässen Verbauens solcher Lehmwandelemente zumeist aneinander stossen und damit die offenen Poren an den stirnseitigen Oberflächen wieder verdecken.

Die Oberflächenbehandlung umfasst das Abtragen einer Schicht von einigen Zentimetern, z.B. von 1 - 5 cm, Dicke von zumindest einer der beiden frei stehenden Seitenflächen bzw. Aussenseiten eines rohen, noch feuchten, d.h. noch nicht endgetrockneten, Lehmwandelements mittels eines geeigneten Schneide-, Säge-, oder Fräs-Werkzeugs, um die darin eingeschlossenen, ungerichtet kreuz und quer liegenden Schilfhalme in verschiedenen Winkeln anzuschneiden und zu öffnen sowie gegebenenfalls eine Begradigung der Wandflächen herbeizuführen. Die dadurch entstehenden, erfindungsgemässen Reetwellerlehm-Elemente mit schallabsorbierender Oberfläche werden für Praxisanwendungen so verbaut, dass die zumindest eine bearbeitete, offenporige, schallabsorbierende Oberfläche der - meistens störenden oder unerwünschten - Schallquelle zugewandt ist.

### BEISPIEL

Um miteinander vergleichbare Probekörper zu erzeugen, ist die jeweilige Lehmmasse in Formen einer festgelegten Größe (40 × 20 × 20 cm) verdichtet worden, aus der Form gelöst und unmittelbar danach in noch feuchtem Zustand in zwei gleich große Teilstücke zersägt worden (20 × 20 × 20 cm).

Dabei zeigte sich, dass wenn die Schilfrohrhalme parallel zueinander und senkrecht zur späteren Wandoberfläche angeordnet sind, die solcherart erzielten Baukörper aus Reetwellerlehm instabiler sind, weil die Zugkräfte im Inneren des Materials nur in eine Richtung, nämlich längs der im wesentlichen parallel ausgerichteten Fasern, abgeleitet werden. Es hat sich hingegen ebenfalls gezeigt, dass die ungeordnete, ungerichtete, möglichst chaotische Anordnung der Schilfrohrhalme im Lehmmaterial eine erhöhte Stabilität mit sich bringt, so dass die hergestellten Probekörper unmittelbar nach der Entnahme aus der Form gesägt werden konnten ohne sich zu verformen.

Die mechanische Festigkeit, insbesondere Druck-, Zug- und/oder Biegefestigkeit, der Reetwellerlehm-Elemente mit chaotischer (isotroper) Anordnung des Schilfrohrmaterials ist unerwartet hoch. Eine optionale Zugabe zusätzlicher pflanzlicher oder tierischer Armierungsfasern in den die Schilfrohrhalme umhüllenden Lehm, zum Beispiel in Form von Hanffasern, und/oder Wollfasern, insbesondere aus Schafwolle, kann die mechanische Stabilität des Materials - speziell bei gerichtet angeordneten Schilfhalmen - zusätzlich erhöhen.

Um für die angestrebte Schallabsorption genügend offene Schilfrohrenden zu erzielen, wurde die Mischung der feuchten, faserarmierten Reetwellerlehmmasse dahingehend optimiert, dass der gewichtsmäßige Schilfrohranteil gegenüber dem Lehmanteil erhöht wurde und die Lehmmasse mit relativ hohem Wasseranteil von beispielsweise 15 bis 30 Gew.%, insbesondere von 20 bis 28 Gew.%, in cremiger, fliessfähiger Konsistenz dem Fasermaterial mit den Schilfrohrhalmen zugesetzt wurde. Dadurch konnte die Lehmmasse schon vor dem eigentlichen Verdichten die Schilfrohrhalme gut umschließen und in alle Zwischenräume zwischen den Schilfrohrhalmen eindringen, so dass keine unerwünschten Hohlräume übrig blieben. Der Wasseranteil wird je nach vorgesehenem Verwendungszweck der Lehmelemente bedarfsgerecht angepasst und kann nach erfolgtem Schneide- oder Sägevorgang der verdichteten und vorgeformten Reetwellerlehmmasse durch natürliche oder künstlich beschleunigte Trocknung auf einen erwünschten Wert eingestellt werden.

Als besonders effektiv für die Erzielung hoher Festigkeiten und guter Schallabsorptionsfähigkeit hat sich erwiesen, unterschiedlich lange Schilfrohrstücke mit der Lehmmasse zu vermischen. Je nach Dimensionierung der Schalung bzw. je nach gewünschter Wandstärke der finalen Lehmelemente enthält eine erfindungsgemäße Reetwellerlehmmasse daher ein Gemisch unterschiedlich langer Schilfrohrhalme von vorzugsweise ca. 1 cm bis ca. 50 cm, insbesondere von ca.3 bis ca. 25 cm Länge, beispielsweise ein Gemisch von Schilfrohrhalmen mit Längen im Bereich von 1, 2, 3, 5, 10, 15, 20, und/oder 25 cm, sowie gegebenenfalls, für spezielle Anwendungszwecke, zusätzlich noch längere Schilfrohrhalme im Bereich von z.B. 30, 35, 40, 45 und/oder bis zu 50 cm.

Das Grundmaterial Lehm sollte vorzugsweise eine Mindestbindigkeit von 50 bis 60 g/cm² haben. "Magerer" Lehm mit einer geringeren Bindigkeit kann mit Ton oder hochbindigem Lehm "fetter" gemacht werden, hochbindiger Lehm kann gegebenenfalls, wenn die jeweilige Anwendung dies erfordert, mit Sand "abgemagert" werden. Für die Materialmischung wird die Zusammensetzung üblicherweise nach Gewicht bestimmt, da wegen z.T. erheblicher Unterschiede in Dichte und Konsistenz die Materialvolumina für eine Bestimmung im Regelfall zu ungenau sind.

Beim Ausgangsstoff Bodenaushub wird außerdem zuerst die Grundfeuchte ermittelt und dann die Menge an allenfalls noch hinzuzufügendem Wasser darauf abgestimmt. Obendrein wird der Bodenaushub vor seiner Verwendung vorzugsweise gesiebt, um grössere Steine abzutrennen, und danach bei Bedarf noch zusätzlich gebrochen, um die Kornstruktur des Bodens durch Zertrümmerung weiter zu verkleinern.

Nachfolgend wird eine prinzipielle Vorgehensweise für die Herstellung erfindungsgemäßer Reetwellerlehmelemente beschrieben, die je nach Bedarf variiert werden kann und mit unterschiedlichem Werkzeug und unterschiedlichen Hilfsmitteln durchführbar ist, ohne vom Geist der vorliegenden Erfindung abzuweichen:
a) Bei Bodenaushub: Lehmbindigkeit bestimmen;
b) Grundfeuchte bestimmen. Dazu kann eine Probe feuchten Lehms gewogen werden, dann getrocknet und erneut gewogen werden. Aus der Gewichtsdifferenz ergibt sich der Wassergehalt;
c) Bodenaushub sieben und von Steinen befreien, gegebenenfalls brechen;
d) die Bindigkeit bei Bedarf durch Zugabe von Ton erhöhen oder mit Sand absenken;
e) Lehm durch Wasserzugabe auf den gewünschten Wassergehalt zu einer homogenen klumpenfreien Masse vorzugsweise cremiger, fließfähiger und/oder spritzfähiger Konsistenz, anmischen;
f) gegebenenfalls die Lehmmasse mit optionalen organischen Nichtschilf-Bestandteilen wie z.B. Hanffasern, Schafwolle, und/oder anderem geeigneten, vorzugsweise regional vorkommendem Fasermaterial gründlich vermischen und 24 Stunden mauken lassen;
g) Schilfrohr in kurze Stücke schneiden oder sägen, keinesfalls häckseln. Die Stücke sollten unterschiedliche Längen von 1 bis 50 cm, insbesondere von ca. 3 bis ca. 25 cm haben. Das Schneiden oder Sägen von Schilfrohrbündeln kann beispielsweise mittels Kreissäge, Bandsäge oder anderen Sägen, oder mittels Trennschneider oder anderem Schneidegerät erfolgen. Das Zuschneiden auf unterschiedliche Längen hat dabei unter anderem den Zweck, eine höhere Schilfrohr-Dichte im chaotischen, richtungslosen Verband in der Lehmmasse zu erzielen (vergleichbar etwa mit der Korngrößenverteilung im Betonbau);
h) die unterschiedlich langen Schilfrohrhalme vorsichtig miteinander vermischen;
i) die Mischung der Schilfrohrhalme mit der vorzugsweise cremigen und gegebenenfalls fließfähigen und/oder spritzfähigen Lehmmasse vereinen, wobei vorzugsweise die Lehmmasse zur Mischung der Schilfrohrhalme hinzugegeben wird; im grosstechnischen Massstab kann dies beispielsweise dadurch bewerkstelligt werden, dass die Lehmmasse mithilfe einer Mörtelpumpe in einen Mischbehälter eingespritzt wird, in welchem sich die Mischung der Schilfrohrhalme befindet; wobei die Menge des Schilfrohrs die Menge der hinzu zu gebenden Lehmmasse bestimmt, oder umgekehrt die Menge an gegebener Lehmmasse die Menge an einzusetzendem Schilfrohrmaterial bestimmt. Die Anteile der Komponenten der erfindungsgemäßen Reetwellerlehmmasse betragen je nach Eigenschaften des Rohlehms und der gewünschten Eigenschaften des Endprodukts vorzugsweise (in Gewichtsprozent):

| | |
|---|---|
| - Lehm | ca. 60-83 % |
| - Wasser | ca. 15-30 % |
| - Schilfrohr | ca. 2-20 % |

j) Überführen der fertig gemischten Reetwellerlehmmassse in eine Schalung oder eine - bevorzugt kontinuierlich arbeitende - Verarbeitungsvorrichtung wie z.B. in einen Verdichtungskanal oder in eine Presskammer. Dabei werden die Breite und Höhe der zu erzeugenden Lehmelemente durch die Abmessungen der Schalung, des Verdichtungskanals oder der Presskammer vorbestimmt, die Länge bzw. Dicke der Lehmelemente wird hingegen erst nach dem Ausschalen (= Entfernung der Schalung) bzw. nach dem Austritt des verdichteten Lehmstranges aus dem Verdichtungskanal bzw. der Presskammer durch einen Schneide- oder Sägevorgang bestimmt. Sie ist identisch mit der gewünschten Wandstärke des dabei gewonnenen Lehmelements;
k) Verdichten: in einer typischen Ausführungsform des Verfahrens wird die Reetwellerlehm-Mischung in Lagen von vorzugsweise ca. 10 bis 50 cm Höhe bzw. Dicke in die Presskammer, den Verdichtungskanal oder in die Schalung gefüllt und vorsichtig so verdichtet, dass die Schilfrohrhalme dabei möglichst nicht zerdrückt werden. Dies wird durch eine cremig und vorzugsweise fließfähig eingestellte Lehmmasse in vorteilhafter Weise dadurch unterstützt, dass sie die Schilfrohrhalme bereits vor dem Verdichten gut umhüllt und dadurch mechanisch etwas stabilisiert;
l) die auf diese Weise erzeugte, verdichtete, Reetwellerlehmmasse kann direkt nach dem Verdichten ausgeschalt bzw. bei der automatischen kontinuierlichen Produktion als vorgeformter Endlosstrang aus der Verarbeitungsvorrichtung, beispielsweise einer Presskammer oder einem Verdichtungskanal, hinaus gefördert werden, worauf einzelne "Scheiben" resp. Quader gewünschter Stärke bzw. Dicke vom Endlosstrang der verdichteten, vorgeformten Reetwellerlehmmasse abgetrennt, d.h. mittels einer Schneide- oder Sägevorrichtung abgeschnitten oder abgesägt werden. Durch den Schneide- oder Sägevorgang werden unzählige lange und kurze, kreuz und quer liegende und in alle Himmelrichtungen weisende Schilfrohrhalme in unterschiedlichen Winkeln angeschnitten oder durchgeschnitten, wodurch an den Schnittflächen nach aussen hin offene Poren, Löcher und Kanäle unterschiedlicher Durchmesser, unterschiedlicher geometrischer Formen, unterschiedlicher Länge, und unterschiedlicher Ausrichtung gebildet werden, wie z.T. aus Fig. 2 ersichtlich.
Bei Elementen, die im Schalungsverfahren hergestellt werden, wird nach dem Ausschalen zumindest eine der durch die Schalung erzeugten Oberflächen durch einen Säge-, Schneide oder Fräsvorgang bearbeitet, d.h. es wird eine oberflächliche Schicht von ca. 1 - 5 cm Dicke durch Sägen oder Fräsen abgetragen, um die erwünschte Porenstruktur freizulegen. Diese Seite stellt die akustisch wirksame Seite des fertigen Reetwellerlehm-Elements dar.
Die abgetrennten oder ausgeschalten Lehmelemente werden dann derart zu vertikalen Wänden oder Flächenelementen verbaut, dass die durch den Schneide- oder Sägevorgang erzeugten Oberflächen der Lehmelemente die jeweiligen frei stehenden Wandflächen bilden, die bei bestimmungsgemäßem Einsatz den Schallquellen zugewandt sind. Typischerweise werden die Lehmelemente stirnseitig, also um einen Winkel von 90° gegenüber der Schneide- oder Sägerichtung gedreht, aneinander gereiht und - beispielsweise mittels Lehmmörtel und sonstigen Haltemitteln - miteinander verbunden, um daraus z.B. eine schallabsorbierende tragende oder nicht-tragende Lehmwand in einem Gebäude oder eine Lärmschutzwand entlang einer viel befahrenen Autobahn oder Bahnstrecke zu errichten. Es sind aber natürlich auch andere als lineare Anordnungen einzelner Lehmelemente zu Verbundelementen möglich, ohne die schallabsorbierenden Eigenschaften der Oberflächen zu beeinträchtigen.
Wesentlich ist, dass möglichst viele an- oder durchgeschnittene Schilfhalme als Löcher, Poren und Kanäle offen an den gesägten, geschnittenen oder gefrästen Oberflächen erscheinen (Fig. 2) und die Oberflächen dadurch schallabsorbierend werden. Zugleich erfüllen die abgeschnittenen Schilfrohrhalme auch die Funktion von Erosionsbremsen und verhindern oder reduzieren die Verwitterung der Oberflächen der Lehmelemente bei deren Anwendung im Außenbereich. Die im Inneren der Lehmelemente eingeschlossenen, nicht angesägten Schilfhalme hingegen erhöhen durch ihre geschlossenen Hohlkammern die wärmedämmende Funktion dieser Lehmelemente und der damit errichteten Wände und sonstigen Flächen.
Das Zuschneiden der Lehmelemente kann mittels Kreissäge, Bandsäge oder mittels einer anderen geeigneten Schneide- oder Sägevorrichtung erfolgen;
m) eine anschließende Trocknung der erfindungsgemäßen Lehmelemente kann durch natürliche oder künstliche Belüftung beschleunigt werden. Durch den Trocknungsvorgang schrumpfen die Lehmelemente geringfügig, was ihre Verwendbarkeit für die vorgesehenen Einsatzzwecke aber nicht schmälert;
n) allenfalls mit Lehm verschmierte Poren, Löcher und/oder Kanäle in der Oberfläche der verdichteten Lehmelemente, hervorgerufen durch den Säge- oder Schneidevorgang der verdichteten Lehmmasse, können nachträglich mittels Druckluft oder anderer geeigneter Verfahren wieder geöffnet werden, sodass die volle Schallabsorptionsfunktionalität sofort wieder gegeben ist. Bei Einsatz der Lehmelemente im Außenbereich ist dies nicht unbedingt nötig, weil dies langfristig durch natürliches "Sandstrahlen" mittels Staub, Wind und Regen von selbst geschieht. In ergänzenden Versuchen hat sich jedoch gezeigt, dass sich besonders gute Sägeergebnisse, d.h. saubere Schnittflächen ohne oder weitestgehend ohne ein Verschmieren der Poren, dadurch erzielen lassen, dass das Sägeblatt einer geeigneten Mauerwerks-Kreissäge unter sehr schnellem Rotieren nur langsam durch den Block bewegt wird.

Dieses Verfahren lässt sich sinngemäss auch auf traditionell händisch aufgeschichtete Stränge aus verdichtetem Reetwellerlehm anwenden. Wobei die Verdichtung in diesem Fall allein durch das Eigengewicht der Reetwellerlehmmasse oder durch zusätzliches händisches oder maschinelles Stampfen oder Rütteln der nacheinander aufgeschichteten Lagen aus Reetwellerlehm erfolgen kann. Die zur Erzeugung der erfindungsgemässen Offenporigkeit erforderliche Oberflächenbehandlung kann auch hier - in Längsrichtung des Stranges aus aufgeschichtetem, verdichtetem Reetwellerlehm - mittels Schneiden, Sägen oder Fräsen vorgenommen werden. Als zusätzlicher Nutzeffekt kann dabei die durch das Schneiden, Sägen oder Fräsen erfolgende Glättung oder Begradigung der auf diese Art und Weise bearbeiteten Seite(n) des Reetwellerlehmstranges, der typischerweise in Form einer Lehmwand ausgeführt wird, angesehen werden.

Die erfindungsgemäß hergestellten Reetwellerlehmelemente besitzen ein hohe Schallabsorptionsfähigeit und erreichen eine Schallabsorption, gemessen mit dem Impedanzrohr, von mindestens 10%, insbesondere von 30 bis 80%, jeweils über das gesamte, für den Straßenverkehr relevante Frequenzspektrum hinweg.

Die Druck- Zug- und Biegefestigkeiten der erfindungsgemässen Reetwellerlehm-Elemente sind u.a. durch die Feuchte des Lehms, die Menge und Qualität an pflanzlichem Armierungsmaterial sowie durch die Stärke der Verdichtung einstellbar. Für den Einsatz als tragende Elemente im Hochbau können durch hohe Verdichtung Druckfestigkeiten im Bereich von beispielsweise mindestens 1 N/mm² bis zu 5 N/mm² erreicht werden, also Werte, wie sie von den Normen und Bauvorschriften des Hochbaus gefordert werden. Mit zunehmender Verdichtung geht allerdings eine Abnahme der Schallabsorbtionsfähigkeit einher, weil die Schilfrohrhalme in Abhängigkeit ihres Innendurchmessers und ihrer Wandstärke ab einem Kippunkt zunehmend gequetscht und damit auch die Poren an den Oberflächen der gesägten, finalen Lehmelemente zusammen gedrückt oder ganz geschlossen werden.

Die mit der Erfindung einhergehenden Vorteile und Qualitätsmerkmale ermöglichen den Einsatz und die Verwendung erfindungsgemäß hergestellter Reetwellerlehm-Elemente zur Errichtung schallabsorbierender tragender und nicht-tragender Wände im Hochbau, insbesondere im Wohnbau, einschließlich akustisch wirksamer, klimaregulierender Wände oder Wandelemente in Innenräumen, sowie zur Errichtung von wärmeisolierenden, schallabsorbierenden Innenwandverkleidungen, Aussenwänden, Aussenfassaden und Fassadenverkleidungen. Ein weiteres Anwendungsgebiet sind ökologisch wie ökonomisch vorteilhafte, schallabsorbierende Lärmschutzwände und nachhaltig gestaltete, lärmreduzierende Begrenzungen empfindlicher Infrastrukturen von beispielsweise Kindergärten, Schulen, Krankenhäusern oder Wohngebieten, wobei diese Anwendungen auch einen Beitrag zur Biodiversität in der Insektenwelt leisten, weil die nach außen hin offenen Hohlräume an der Oberfläche der verbauten Lehmelemente von zahlreichen kleineren Insektenarten, wie z.B. Solitärbienen, gerne als Bruthöhlen angenommen werden.

## Patentansprüche

1. Verfahren zur Herstellung von schallabsorbierenden, faserverstärkten Lehmelementen aus Reetwellerlehm, **dadurch gekennzeichnet, dass** es folgende Schritte umfasst:
a) Bereitstellen von Lehm einer bevorzugten Mindestbindigkeit von 50 g/cm² ;
b) Bereitstellen einer Mischung von gesägten oder geschnittenen, im wesentlichen intakten und im Inneren hohlen Schilfrohrhalmen unterschiedlicher Längen in einem Bereich von 1 bis 50 cm, vorzugsweise von 3 bis 25 cm;
c) Einstellen des Wassergehaltes des Lehms bis zum Erreichen einer cremigen, fließfähigen und/oder spritzfähigen Konsistenz, sowie optional Zusatz von pflanzlichem und/oder tierischem Nicht-Schilfrohr Fasermaterial zwecks Herstellung einer faserarmierten Lehmmasse;
d) Mischen der Schilfrohrhalme mit der cremigen, fließfähigen und/oder spritzfähigen, gegebenenfalls faserarmierten, Lehmmasse zu Reetwellerlehm mit darin zufällig und ungerichtet kreuz und quer angeordneten Schilfrohrhalmen unterschiedlicher Längen;
e) Überführen des Reetwellerlehms in eine Schalung, gegebenenfalls eine Gleitschalung, oder in eine - vorzugsweise kontinuierlich arbeitende - Verarbeitungsvorrichtung, oder händisches Aufschichten des Reetwellerlehms in gewünschter Höhe und Breite;
f) Verdichten des Reetwellerlehms zur Erzeugung eines vorgeformten Stranges aus verdichtetem Reetwellerlehm mit gegebenenfalls im Wesentlichen rechteckigem Querschnitt; und
g) Durchführen mindestens eines Schneide, Säge- oder Fräsvorganges an dem vorgeformten Strang aus verdichtetem Reetwellerlehm,
wodurch Schilfrohrhalme in verschiedenen Winkeln an- oder durchgeschnitten werden, sodass an den Schnittflächen der resultierenden Lehmelemente nach außen hin offene Hohlräume und Kanäle unterschiedlicher Grösse, Form, Länge und Ausrichtung mit schallabsorbierenden Eigenschaften gebildet werden.

2. Verfahren nach Anspruch 1, **dadurch gekennzeichnet, dass** die cremige, fließfähige und/oder spritzfähige Lehmmasse nach Absatz (c) mit Hanffasern und/oder tierischem Fasermaterial, insbesondere Schafwolle, vermischt wird.

3. Verfahren nach Anspruch 1 oder 2, **dadurch gekennzeichnet, dass** die Reetwellerlehmmasse 60 - 83 Gew.% Lehm, 15 - 30 Gew.% Wasser und 2 - 20 Gew.% Schilfrohrhalme enthält.

4. Verfahren nach einem der Ansprüche 1 bis 3, **dadurch gekennzeichnet, dass** der vorgeformten Strang aus verdichtetem Reetwellerlehm mittels einer Schneide- oder Sägevorrichtung quer zu seiner Längsrichtung in einzelne Lehmelemente zerteilt wird, wobei an den resultierenden Schnittflächen der Lehmelemente nach außen hin offene Hohlräume und Kanäle unterschiedlicher Grösse, Form, Länge und Ausrichtung mit schallabsorbierenden Eigenschaften gebildet werden.

5. Verfahren nach einem der Ansprüche 1 bis 3, **dadurch gekennzeichnet, dass** der vorgeformte Strang aus verdichtetem Reetwellerlehm einen im Wesentlichen rechteckigen Querschnitt aufweist und mittels einer Schneide- oder Sägevorrichtung quer zu seiner Längsrichtung in einzelne Lehmelemente zerteilt wird, worauf die Lehmelemente in Längsrichtung an mindestens einer der im Zuge des Verdichtens erzeugten, seitlichen Aussenflächen einer Oberflächenbehandlung durch Schneiden, Sägen oder Fräsen unterzogen werden, wodurch an den resultierenden Schnittflächen der Lehmelemente nach außen hin offene Hohlräume und Kanäle unterschiedlicher Grösse, Form, Länge und Ausrichtung mit schallabsorbierenden Eigenschaften gebildet werden.

6. Verfahren nach einem der Ansprüche 1 bis 3, **dadurch gekennzeichnet, dass** der durch händisches Aufschichten vorgeformte Strang aus verdichtetem Reetwellerlehm an zumindest einer der im Zuge des Verdichtens erzeugten, seitlichen Aussenflächen einer Oberflächenbehandlung durch Schneiden, Sägen oder Fräsen in Längsrichtung unterzogen wird, wodurch an der resultierenden Schnittfläche nach außen hin offene Hohlräume und Kanäle unterschiedlicher Grösse, Form, Länge und Ausrichtung mit schallabsorbierenden Eigenschaften gebildet werden, und wobei gegebenenfalls eine Begradigung des vorgeformten Stranges aus verdichtetem Reetwellerlehm an der Seite der durchgeführten Oberflächenbehandlung erfolgt.

7. Verfahren nach Anspruch 5 oder 6, **dadurch gekennzeichnet, dass** die Oberflächenbehandlung das Abschneiden, Absägen oder Abfräsen einer Schicht von typischerweise 1 - 5 cm Dicke von einer seitlichen Aussenfläche eines vorgeformten Lehmelements aus verdichtetem Reetwellerlehm umfasst.

8. Schallabsorbierendes Lehmelement auf Basis einer verdichteten Reetwellerlehmmasse mit einer bevorzugten Lehm-Mindestbindigkeit von mindestens 50 g/cm², **dadurch gekennzeichnet, dass** es geschnittene oder gesägte, im wesentlichen intakte und im Inneren hohle Schilfrohrhalme enthält und gegebenenfalls zusätzliches Nicht-Schilfrohr-Fasermaterial, insbesondere Hanffasern und/oder tierische Wollfasern als Armierungsmaterial umfasst, wobei die Schilfrohrhalme unterschiedliche Längen in einem Bereich von 1 bis 50 cm, insbesondere von 3 bis 25 cm aufweisen und ungerichtet kreuz und quer in der Lehmmasse angeordnet sind, und wobei das schallabsorbierende Lehmelement mindestens eine durch Schneiden, Sägen oder Fräsen erzeugte Oberfläche besitzt, die eine Vielzahl an nach außen hin offenen Hohlräumen und Kanälen unterschiedlicher Form, Grösse, Länge und Ausrichtung, gebildet durch in unterschiedlichen Winkeln an- oder durchgeschnittene Schilfrohrhalme, aufweist.

9. Schallabsorbierendes Lehmelement nach Anspruch 8, **dadurch gekennzeichnet, dass** es in feuchtem Rohzustand 60 - 83 Gew.% Lehm, 15 - 30 Gew.% Wasser und 2 - 20 Gew.% Schilfrohrhalme enthält.

10. Schallabsorbierendes Lehmelement nach Anspruch 8 oder 9, **dadurch gekennzeichnet, dass** es eine Schallabsorptionsfähigkeit, gemessen mit dem Impedanzrohr, von mindestens 10%, insbesondere von 30 bis 80%, über das gesamte, für den Straßenverkehr relevante Frequenzspektrum hinweg, aufweist.

11. Schallabsorbierendes Lehmelement nach einem der Ansprüche 8 bis 10, **dadurch gekennzeichnet, dass** es zur Verwendung als tragendes oder nicht-tragendes Wandelement im Hochbau, insbesondere in Gebäuden, eine Druckfestigkeit von mindestens 1 N/mm², vorzugsweise von 2 bis 5 N/mm², aufweist.

12. Verwendung eines in einem der Ansprüche 8 bis 11 definierten, schallabsorbierenden Lehmelements aus Reetwellerlehm, als funktionelles und/oder ästhetisches Element im ökologisch nachhaltigen Infrastruktur-, Landschafts- und Hochbau.

13. Verwendung nach Anspruch 12, zur Errichtung akustisch wirksamer, tragender oder nicht-tragender, klimaregulierender Wände oder Wandelemente in Gebäuden, zur Herstellung von schallabsorbierenden, wärmedämmenden Innenwandverkleidungen, Aussenwänden, Aussenfassaden und Fassadenverkleidungen im Hochbau, sowie zur ökologischen, geräuschmindernden Landschaftsgestaltung, zur Errichtung von Lärmschutzwänden, insbesondere entlang viel befahrener Verkehrswege, und zur nachhaltigen Gestaltung von optischen und/oder akustischen Begrenzungen empfindlicher Infrastrukturen von beispielsweise Kindergärten, Schulen, Krankenhäusern oder Wohngebieten.
